# EUROPEAN PATENT SPECIFICATION

(11) **EP 4 314 592 B1**
(45) Date of publication and mention of the grant of the patent: **04.03.2026**
(21) Application number: 22714250.2
(22) Date of filing: 16.03.2022
(51) Int. Cl.: F16D 65/12

(54) **DISC FOR DISC BRAKES**
SCHEIBE FÜR SCHEIBENBREMSEN
DISQUE POUR FREINS À DISQUE

(30) Priority: 23.03.2021 IT 202100006974
(43) Date of publication of application: 07.02.2024
(73) Proprietor: Petroceramics S.p.A., 24040 Stezzano, Bergamo (IT)
(72) Inventor: BOIOCCHI, Matteo, 24040 Stezzano, Bergamo (IT); VALLE, Massimiliano, 24040 Stezzano, Bergamo (IT)
(74) Representative: Crippa, Paolo Ernesto
(86) International application number: PCT/IB2022/052355
(87) International publication number: WO 2022/200921

(56) References cited:
- US-A1- 2008 073 165
- US-A1- 2008 135 359
- US-A1- 2017 175 835

## Description

### . Field of the invention

. The present invention relates to a disc for a disc brake, particularly, but not exclusively, for applications in the automotive field.

. In particular, the present invention further relates to a braking band for a disc of a disc brake, a bell for a disc brake, and a method for making a disc brake disc.

### . Background art

. It is known that disc brake discs consist of two parts which share a rotation axis. A first part (the support bell) is intended to be connected to a wheel hub of a vehicle, while the remaining peripheral part (the braking band) is intended to cooperate with a disc brake caliper which, arranged straddling said braking band, applies a braking action on the vehicle. The braking band can be of the full or ventilated type. The ventilated band comprises two plates mutually connected by means of a plurality of bridges or connection elements to define circulation channels for the cooling air.

. With reference to the disc and its rotation axis, any direction parallel to said rotation axis is defined as axial, any direction perpendicular to the rotation axis and incident to it is defined as radial, and any direction tangential or circumferential is defined as a tangent to a circumference centered on said rotation axis and lying on a plane normal to said axis or a circumferential direction coincident with said circumference.

. It is known that during the operation of the brakes, the friction between the pads of the brake calipers and the surface of the braking band generates a high amount of heat which requires disposal. The generated heat determines the onset of many undesirable phenomena, first of all, the overheating of the components and the consequent thermal expansion and deformation thereof.

. The need is particularly felt to make the braking band with a material, which, in addition to guaranteeing the desired friction characteristics, can maintain its mechanical characteristics as unaltered as possible as the operating temperature increases.

. Similarly, the particular need is felt to make the support bell of a material, which is as light as possible firstly to reduce the weight of the disc and consequently the unsprung mass of the vehicle. In view of this, it is particularly advantageous to make the support bell of a lightweight material, e.g. a polymer material.

. With reference to the discs of the prior art, it is worth noting that deformations due to thermal stresses lead to drawbacks in the operation of the disc brake, first of all the uneven wear of the brake caliper pads. This is mainly due to the fact that, unlike the braking band, which tends to deform radially while remaining coplanar to itself, the support bell deforms assuming a cone-shaped configuration, which also causes the warping of the braking band, i.e., the deformation of the braking band outside the plane on which it initially laid. Substantially, the deformation of the support bell determines the warping and thus the loss of coplanarity of the braking band.

. From the above, it is apparent that there is a twofold need to maintain the transmission of braking torque from the braking band to the support bell and, at the same time, to allow the braking band to expand radially due to the thermal stresses to which it is subjected, as independently as possible from the support bell.

US 2008/073165 A1 discloses a brake disc assembly for vehicle wheels, comprising at least one friction ring and a wheel fixing zone that runs parallel to the friction ring, whereby the friction ring and the wheel fixing zone are configured in one-piece form from a cast material and whereby connecting struts are formed between the friction ring and the wheel fixing zone.

. Document EP 1426644 discloses a disc brake disc having a braking band made of a first material and a bell made of a second material. This document shows different solutions which allow the bell to be coupled to the braking band by plastic deformation of the material of the bell on a coupling portion of the band, or alternatively which allow the bell to be cast about band projections.

. This well-known solution, although satisfactory from many points of view, does not allow a coupling between the band and the bell which guarantees the transmission of torque from the band to the hub during high and repeated thermal excursions, because of the suggested geometry of the coupling between band and bell, and because of the conical deformation of the bell, which deteriorates the geometric coupling between the bell and the band even more.

. So-called composite discs have been suggested to reduce the thermal stresses to which traditional brake discs are subjected, particularly when used on high-performance cars. Compared to the earlier designed discs, integrally made up of an annular element, or braking band, a hub, and a bell, respectively arranged to provide the braking surfaces to the brake calipers and couple the brake disc to a wheel. The peculiarity of composite discs is in that the braking band and the bell are made as separate parts, possibly of different materials, which are finally coupled together with suitable connection means.

. The assembled discs, consisting of two connected parts, such as the brake band and the bell, have proven to be very successful in solving the thermal expansion problems for which they were designed. However, when the car on which these discs are mounted travels on roads with uneven and irregular paving (e.g. cobblestones, paving stones, etc.), particularly harmful vibrations and shaking are generated, which can produce unwanted noise and even compromise the integrity of the discs themselves.

### . Solution

. Thus, the present invention suggests to provide a brake disc, of the assembled type, which has the following advantages:
. A variable geometry in use, which is such that it allows compensating for misalignments between the brake disc and the brake pads
. A decrease in sprung mass through the use of advanced polymeric materials
. A better ability to compensate for vibrations which, in extreme cases, can lead to structural failure of the brake disc and which are normally dealt with by floating joints.

. The bell of the present invention, axisymmetric relative to the rotation axis X, provides a particular and innovative axial or radial conformation comprising at least one corrugated element. Said conformation, together with the fact that it is made of polymeric material, allows modifying the geometry of the bell in use, compensating for misalignments between the brake disc and brake pads and dampening the vibrations generated between the brake disc and pads, while reducing stress and possible breakage.

. Said bell, with its particular shape comprising at least one corrugated element, has several degrees of freedom and allows the offsetting of the disc relative to the rotation axis (X) and the sliding of the brake disc along said rotation axis and symmetry (X) to adapt the disc to any misalignments between it and the brake pads.

. The bell thus designed allows a rotation of the disc constrained to it around the axis normal to the rotation axis (X) and its translation along the rotation axis (X), through elastic deformation.

. The brake disc bell of the present invention, with the same dimensions, can replace a standard bell made of metallic material while having a significantly lower weight than the corresponding bell made of metallic material. The bell must be able to withstand the most severe thermal-mechanical stresses for it to be made of a polymeric material.

. The use of high-temperature resistant polymer composites is also known in the prior art.

. Patent IT102017000089430 describes composites with siloxane resin-based matrixes.

. Patent application US20150099078 describes composites with siloxane and silazane resin-based matrixes.

. Patent US5,552,466 describes composites with silsesquiloxane resin-based matrixes.

. Furthermore, the need is felt in the sector to reduce the number of components and to simplify as far as possible the system, normally based on the use of floating joints, with which to adapt the brake disc to the brake pads, minimizing vibrations, noise, and mechanical stress.

. Hereinafter, the invention will be described referring to two preferred, but non-limiting, embodiments with reference to the accompanying drawings, in which:

. The bell advantageously comprises at least one corrugated element made of elastically deformable material which allows the oscillation by elastic deformation of the bell.

. In other words, the corrugation allows obtaining flexural elastic deformability which is such that it allows first of all the oscillation of the bell itself about an axis normal to the rotation axis.

. Hereafter in this description, the term "corrugation" means a continuous and periodic succession of annular ridges and grooves.

. The present invention relates to a disc brake caliper comprising:
- a braking band rotating about the rotation axis (X);
- a bell rigidly and torsionally connected to the hub of a vehicle and functionally constrained to said braking band and adapted to transmit the rotational motion to said brake disc; wherein
   . said bell comprises at least one corrugated element made of a fiber-reinforced polymer or carbon-ceramic material,
   . adapted to allow a rotation of said bell, which is integral with said hub about said rotation axis (X), a rotation of the disc constrained thereto, about an axis normal to said rotation axis (X) through elastic deformation, and a translation along said rotation axis (X) through elastic deformation.

. Preferably, the brake disc according to the present invention is characterized in that said corrugated element is torsionally rigid and yielding in bending. This allows the transmission of torque from the hub to the braking band and the simultaneous freedom of rotation of the plane on which the braking band lies, and thus the adaptation to any misalignments between the braking band and the brake-pin pads. This adaptation allows minimizing wear and reduce system vibrations.

. Preferably, the corrugated brake disc element according to the present invention is axisymmetric about the rotation axis (X) and has a first ring, which has an extension direction parallel to said axis and a thickness radial to said axis. The axisymmetry characteristic allows obtaining a homokinetic type of torque transmission behavior, i.e. independent of its angular position. The presence of the ring allows the braking band to be able to rotate independently of its orthogonality to the rotation axis X and to translate its position along the rotation axis X by changing its offset.

. Even more preferably, the corrugated brake disc element of the present invention comprises at least one first ring which is radially outer relative to said axle and a second ring which is radially inner relative to said axle. Said geometric feature allows the structure to be more flexibly yielding, i.e., to be able to change shape, bending under the action of loads of lower magnitude than the design torsional loads.

. Even more preferably, the first corrugated element is made of a fiber-reinforced composite material, wherein the fibers are selected from the group consisting of carbon fibers, glass fibers, ceramic fibers, or mixtures thereof. The use of fiber-reinforced composite materials allows, after correct positioning of the fibers within the matrix, obtaining an element capable of maximizing the ability to carry loads in the direction of the fibers themselves and, therefore, to withstand torsional loads. Similarly, it is possible to arrange the fibers within the geometry of the part to allow bending movements in the desired directions. Furthermore, said materials have an advantageous mechanical property to density ratio by presenting high mechanical strengths and densities, which are typically between 1.8 and 2.1 g/cm3

. Alternatively, the at least one first corrugated element of the brake disc according to the present invention is made of carbon fibers from polyacrylonitrile (PAN) and/or carbon fibers from pitch. The use of these types of fibers allows maximizing the mechanical characteristics of the corrugated element and to modulate the thermal conductivity of the materials thus allowing designing the thermomechanical characteristics of the manufactured objects.

. Alternatively, the at least one first corrugated element according to the present invention is made of glass or ceramic fibers, consisting of silica, alumina, zirconia, or silicon carbide, and the matrix from phenolic, epoxy, siloxane, silsesquioxane resins. The use of such materials, or a combination of them, allows maximizing the torsional stiffness value of the corrugated element.

. Preferably, the at least one first corrugated element of the brake disc according to the present invention is made of a fiber-reinforced composite material preferably based on carbon fibers and having a siloxane matrix (CPreg-400 ^{®}).

. The use of this material makes the polymer composite specifically resistant to high temperatures (400°C long term thermal exposure; 650°C short term thermal exposure).

. Preferably, the at least one first corrugated brake disc element of the present invention is made of the same material as the brake bell. This allows simplifying the construction avoiding joining elements between the corrugated element and the bell

. In a first embodiment, the bell, symmetrical relative to the rotation axis X, has at least one corrugation extending axially, then parallel to the rotation axis of the brake disc.

. In a second embodiment, the bell, symmetrical relative to the rotation axis X, has at least one corrugation extending radially, relative to the rotation axis of the brake disc.

. According to a first embodiment, the corrugation has a section containing the XY plane
- a longitudinal extension direction, along which ridges and grooves repeat periodically; and
- a transverse direction orthogonal to the direction of extension along which the ridges and grooves are mutually opposite.

. The distance between two consecutive ridges (grooves) along the longitudinal direction is called the pitch p of the corrugation.

. The distance between the ridges and grooves along the transverse direction is called the height h of the corrugation.

. The corrugation has, according to a second embodiment, a section containing the XY plane
- a transversal extension direction along which ridges and grooves repeat periodically; and
- a longitudinal direction orthogonal to the direction of extension along which the ridges and grooves are mutually opposite.

. The distance between two consecutive ridges (grooves) along the longitudinal direction is called the pitch p of the corrugation.

. The distance between the ridges and grooves along the longitudinal direction is called the height h of the corrugation.

### . Brief description of the drawings

. This description will be presented below with reference to the appended drawings, provided for indicative purposes only, and therefore non-limiting, in which:
- figure 1 is a perspective section view of an assembled disc for a disc brake according to a first embodiment of the invention;
- figure 2 is an exploded perspective view of the disc in figure 1;
- figure 3 is a side section of the assembled disc from figure 1, showing in detail the assembly of a connecting device between the braking band and the disc bell;
- figure 4 is a perspective section view of an assembled disc for a disc brake according to a second embodiment of the invention;
- figure 5 is a perspective section view of the assembled disc in figure 4 which shows in detail the assembly of a connecting device between the braking band and the disc bell.

### . Description of some preferred embodiments

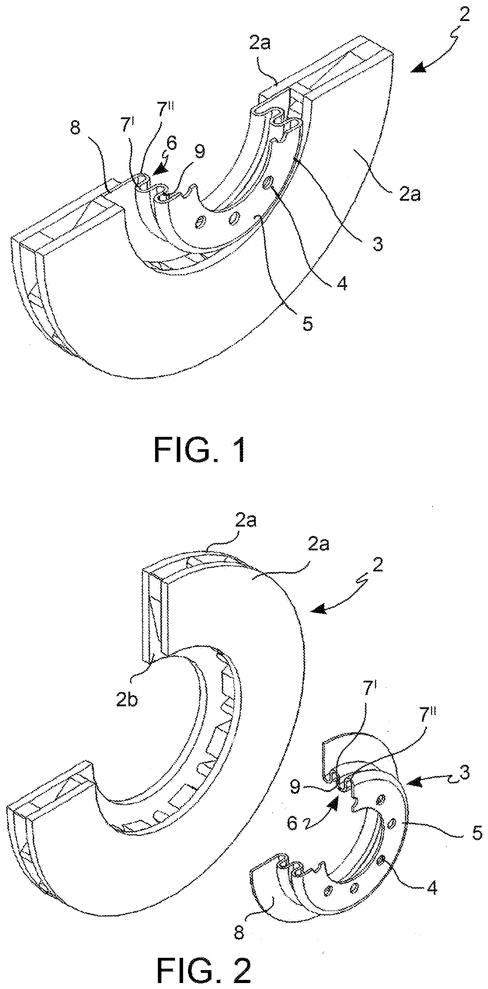

. Referring to figures 1, 2, 3, 4 and 5 a brake disc 2 substantially comprises:
- a pair of opposite opposing surfaces 2a,
- a bell substantially comprises:
- a head member 5 adapted to be connected to the hub (not shown), by means of screws and/or dowels and/or other known elements, passing through the holes 4;
- a corrugated element or corrugation 6.

. With reference to a first embodiment, shown in figs. 1, 2, and 3, the corrugation 6 is of longitudinal type, with the ridges extending in the longitudinal direction.

. The corrugation comprises discoidal elements and extends about the axis X.

. The connecting element 8 is discoidal, and is connected to the head element 5 by the corrugation 6.

. The connecting element 8 is connected to the brake disc portion 2b, adapted to accommodate the bell, by means of techniques well known in the prior art. Said techniques comprise, by way of non-limiting example: co-fusion, fixing by means of screws or rivets.

. The corrugation comprises a respective plurality of rings 7', 7'', etc.

. The rings 7', 7'' are mutually alternating radially to the axis X and define respective opposite axial ends of corresponding corrugations 6.

. The rings 7', 7'', are arranged at a mutual first distance, according to a pitch p of the corrugation

. The rings 7', 7'' of the corrugation 6 are mutually connected by connecting sections 9 interposed, each, between a respective ring 7' and the respective rings 7'', 7‴, etc., adjacent thereto.

. The plurality of stretches 9 extend axially from the respective ring 7' towards the respective subsequent rings.

. The corrugation 6 has a serpentine shape in the section parallel to the axis X.

. The rings 7', 7'' lie on respective planes orthogonal to the axis X.

. The corrugation 6 comprises respective plurality of rings 7', 7''.

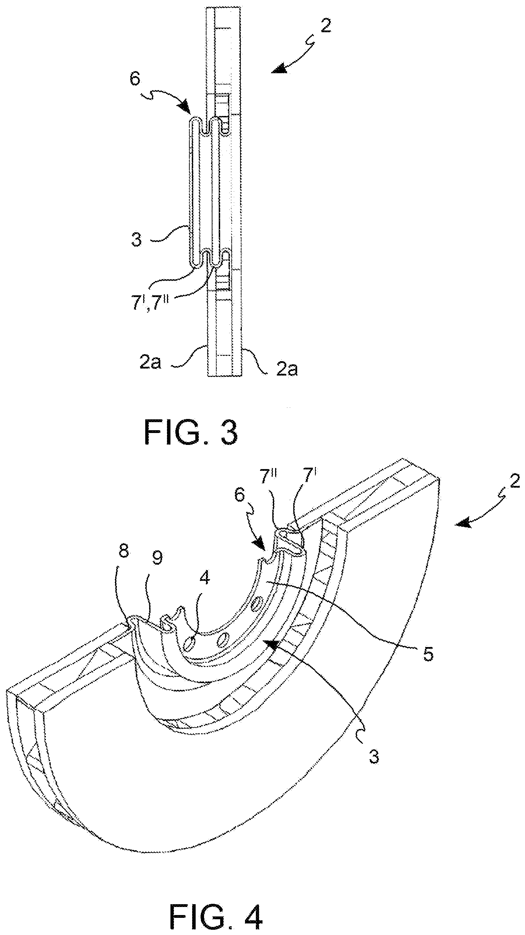

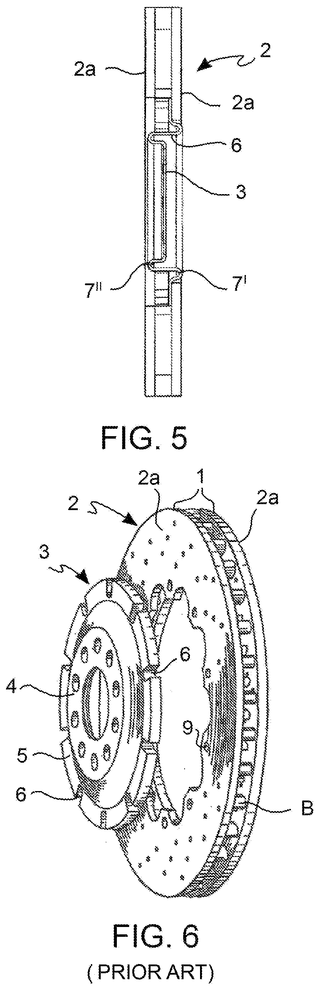

. With reference to a second embodiment, in figs. 4 and 5, the corrugation 6 is radial, with the ridges 7 extending in an axial direction.

. The corrugation comprises discoidal elements which extend about their respective axes X.

. The connecting element 8 is discoidal, and is connected to the head element 5 by the corrugation 6.

. The connecting element 8 is connected to the brake disc portion 2b, adapted to accommodate the bell, by means of techniques well known in the prior art. Said techniques comprise, by way of non-limiting example: co-fusion, fixing by means of screws or rivets.

. The corrugation comprises a respective plurality of rings 7', 7'', etc.

. The rings 7', 7'' are mutually alternating radially to the axis X and define respective opposite axial ends of corresponding corrugations 6.

. The rings 7', 7'', are arranged at a mutual first distance, according to a pitch p of the corrugation

. The rings of the corrugation 7 are mutually connected by connecting sections 9, each interposed between a respective ring 7' and the respective rings 7'', 7‴, etc., adjacent thereto.

. Each section 9 extends axially from the respective ring 7' toward the respective subsequent rings.

. The corrugation 6 has a serpentine shape in the section parallel to the axis X.

. The rings 7', 7'' lie on planes orthogonal to the axis X.

. The corrugation 6 comprises a respective plurality of rings 7', 7".

. The corrugation 3 comprises respective radially inner ends 5 and 8 connected to the brake disc portion 2b and the hub.

. In particular, the bell 3 is made of a composite material, specifically a fiber-reinforced laminate.

. Alternatively, the bell 3 is made of carboceramic material.

. In more detail, the corrugated element 3 is homokinetic, i.e., the relationship between the rotational speed and its axial deformation is constant.

. This is achieved in that the ends 5 and 8 extend continuously and uniformly about the axis X. Consequently, no "jerky" hub movements are generated.

. Furthermore, the corrugated element 6 allows the oscillation of the brake disc about the axis normal to the rotation axis X, by virtue of the presence of the corrugated element 6 and the fact that it is made of a fiber-reinforced or carbon-ceramic composite laminate.

. The corrugated element 6 allows said oscillation by means of its flexural elastic deformation while it ensures the transmission of torque from the brake disc to the hub by means of its torsional stiffness.

## Claims

1. A brake disc (2) for disc brake comprising:
- a braking band (2a) rotating about the rotation axis (X);
- a bell (3) rigidly and torsionally connected to the hub of a vehicle and functionally constrained to said braking band (2a) and adapted to transmit the rotational motion to said brake disc (2);
wherein said bell (3) comprises at least one corrugated element (6) **characterised in that** said corrugated element (6) is made of a fiber-reinforced polymer or carbon ceramic material,
adapted to allow a rotation of said bell (3) which is integral with said hub about said rotation axis (X), a rotation of the disc constrained thereto, about an axis normal to said rotation axis (X) through elastic deformation, and a translation along said rotation axis (X) through elastic deformation.

2. A brake disc (1) according to claim 1, **characterized in that** said corrugated element (6) is torsionally rigid and yielding in bending.

3. A brake disc (1) according to claim 1 or 2, wherein the corrugated element (6) is axisymmetric about the rotation axis (X) and has a first ring (7'); said first ring (7') having an extension direction parallel to said axis (A-A) and a radial thickness with respect to said axis (A-A).

4. A brake disc (1) according to claims 1-3, wherein the corrugation (6) comprises at least a first ring (7') which is radially external with respect to said axis (A-A) and a second ring (7'') which is radially internal with respect to said axis (A-A).

5. A brake disc (1) according to one of the preceding claims, wherein the first ring (7') and the second ring (7") are connected to each other by means of connecting sections (9).

6. A brake disc (1) according to any one of the preceding claims, **characterized in that** said at least a first corrugated element (6) is made of a fiber-reinforced composite material, where the fibers are selected from the group consisting of carbon fibers, glass fibers, ceramic fibers, or mixtures thereof.

7. A brake disc (1) according to claim 6, **characterized in that** said at least a first corrugated element (6) is made of carbon fibers from polyacrylonitrile (PAN) and/or carbon fibers from pitch.

8. A brake disc (1) according to claim 6 or 7, **characterized in that** said at least a first corrugated element (6) is made of a fiber-reinforced composite material preferably carbon-fiber-based and with a siloxane matrix (CPreg-400 ^{®}).

9. A brake disc (1) according to claim 6, **characterized in that** said at least a first corrugated element (6) is made of glass or ceramic fibers, consisting of silica, alumina, zirconia, or silicon carbide, and the matrix from phenolic, epoxy, siloxane, silsesquioxane resins.

10. A brake disc (1) according to any one of the preceding claims, **characterized in that** said at least a first corrugated element (6) is made of a material substantially equal to that of the bell (3).

## Patentansprüche

1. Bremsscheibe (2) für Scheibenbremse, umfassend:
- ein Bremsband (2a), das sich um die Drehachse (X) dreht;
- eine Glocke (3), die starr und verdrillend mit einer Nabe eines Fahrzeugs verbunden ist und operativ an das Bremsband (2a) befestigt wird und eingerichtet ist, die Drehbewegung auf die Bremsscheibe (2) zu übertragen;
wobei
die Glocke (3) mindestens ein gewelltes Element (6) umfasst, **dadurch gekennzeichnet, dass** das gewellte Element (6) aus einem faserverstärkten Polymer oder aus einem Kohlenstoff-Keramikmaterial besteht, das eingerichtet ist, eine Drehung der Glocke (3), die mit der Nabe fest verbunden ist, um die Drehachse (X), eine Drehung der daran befestigten Scheibe um eine Achse, die senkrecht zu der Drehachse (X) ist, durch elastische Verformung sowie eine Verschiebung entlang der Drehachse (X) durch elastische Verformung zu ermöglichen.

2. Bremsscheibe (1) nach Anspruch 1, **dadurch gekennzeichnet, dass** das gewellte Element (6) torsionsfest und nachgiebig bei Biegung ausgebildet ist.

3. Bremsscheibe (1) nach Anspruch 1 oder 2, wobei das gewellte Element (6) achsensymmetrisch um die Drehachse (X) ist und einen ersten Ring (7') aufweist; wobei der erste Ring (7') eine Erstreckungsrichtung, die parallel zu der Achse (A-A) ist und eine radiale Dicke in Bezug auf die Achse (A-A) aufweist.

4. Bremsscheibe (1) nach den Ansprüchen 1-3, wobei die Welle (6) mindestens einen ersten Ring (7') umfasst, der sich radial außen in Bezug auf die Achse (A-A) befindet, und einen zweiten Ring (7"), der sich radial innen in Bezug auf die Achse (A-A) befindet.

5. Bremsscheibe (1) nach einem der vorhergehenden Ansprüche, wobei der erste Ring (7') und der zweite Ring (7") durch Verbindungsabschnitte (9) miteinander verbunden sind.

6. Bremsscheibe (1) nach einem der vorhergehenden Ansprüche, **dadurch gekennzeichnet, dass** das mindestens eine erste gewellte Element (6) aus einem faserverstärkten Verbundmaterial besteht, wobei die Fasern aus der Gruppe bestehend aus Kohlenstofffasern, Glasfasern, Keramikfasern oder deren Mischungen, ausgewählt werden.

7. Bremsscheibe (1) nach Anspruch 6, **dadurch gekennzeichnet, dass** das mindestens eine erste gewellte Element (6) aus Kohlenstofffasern aus Polyacrylnitril (PAN) und/oder aus Kohlenstofffasern aus Pech besteht.

8. Bremsscheibe (1) nach Anspruch 6 oder 7, **dadurch gekennzeichnet, dass** das mindestens eine erste gewellte Element (6) aus einem faserverstärkten Verbundmaterial, vorzugsweise auf Kohlenstofffaserbasis und mit einer Siloxanmatrix (CPreg-400 ^{®}) besteht.

9. Bremsscheibe (1) nach Anspruch 6, **dadurch gekennzeichnet, dass** das mindestens eine erste gewellte Element (6) aus Glas- oder Keramikfasern besteht, die aus Siliziumdioxid, Aluminiumoxid, Zirkoniumdioxid oder Siliziumkarbid bestehen, und die Matrix aus phenolischen, epoxidischen, siloxanischen oder silsesquioxanischen Harzen besteht.

10. Bremsscheibe (1) nach einem der vorhergehenden Ansprüche, **dadurch gekennzeichnet, dass** das mindestens eine erste gewellte Element (6) aus einem Material besteht, das im Wesentlichen dem der Glocke (3) gleich ist.

## Revendications

1. Disque de frein (2) pour frein à disque comprenant :
une bande de freinage (2a) tournant autour de l'axe de rotation (X) ;
une cloche (3) rigidement et de manière torsionnelle reliée au moyeu d'un véhicule et fonctionnellement contrainte à ladite bande de freinage (2a) et apte à transmettre le mouvement de rotation audit disque de frein (2) ;
dans lequel
ladite cloche (3) comprend au moins un élément ondulé (6), **caractérisé en ce que** ledit élément ondulé
(6) est réalisé en un matériau polymère renforcé de fibres ou en matériau céramique au carbone,
apte à permettre une rotation de ladite cloche (3) solidaire dudit moyeu autour dudit axe de rotation (X), une rotation du disque qui y est contraint autour d'un axe perpendiculaire audit axe de rotation (X) par déformation élastique, et une translation le long dudit axe de rotation (X) par déformation élastique.

2. Disque de frein (1) selon la revendication 1, **caractérisé en ce que** ledit élément ondulé (6) est rigide en torsion et flexible en flexion.

3. Disque de frein (1) selon la revendication 1 ou 2, dans lequel l'élément ondulé (6) est axisymétrique autour de l'axe de rotation (X) et comporte un premier anneau (7') ; ledit premier anneau (7') présentant une direction d'extension parallèle audit axe (A-A) et une épaisseur radiale par rapport audit axe (A-A).

4. Disque de frein (1) selon les revendications 1-3, dans lequel l'ondulation (6) comprend au moins un premier anneau (7') qui est radialement externe par rapport audit axe (A-A) et un second anneau (7") qui est radialement interne par rapport audit axe (A-A)

5. Disque de frein (1) selon l'une quelconque des revendications précédentes, dans lequel le premier anneau (7') et le second anneau (7") sont reliés l'un à l'autre au moyen de sections de liaison (9)

6. Disque de frein (1) selon l'une quelconque des revendications précédentes, **caractérisé en ce que** ledit au moins un premier élément ondulé (6) est réalisé en un matériau composite renforcé de fibres, les fibres étant choisies dans le groupe constitué de fibres de carbone, fibres de verre, fibres céramiques ou mélanges de celles-ci.

7. Disque de frein (1) selon la revendication 6, **caractérisé en ce que** ledit au moins un premier élément ondulé (6) est réalisé en fibres de carbone provenant de polyacrylonitrile (PAN) et/ou en fibres de carbone issues du brai.

8. Disque de frein (1) selon la revendication 6 ou 7, **caractérisé en ce que** ledit au moins un premier élément ondulé (6) est réalisé en un matériau composite renforcé de fibres, de préférence à base de fibres de carbone et avec une matrice siloxane (CPreg-400 ^{®}).

9. Disque de frein (1) selon la revendication 6, **caractérisé en ce que** ledit au moins un premier élément ondulé (6) est réalisé en fibres de verre ou en fibres céramiques, composées de silice, alumine, zircone ou carbure de silicium, et la matrice à base de résines phénoliques, époxydes, siloxanes, silsesquioxanes.

10. Disque de frein (1) selon l'une quelconque des revendications précédentes, **caractérisé en ce que** ledit au moins un premier élément ondulé (6) est réalisé en un matériau sensiblement identique à celui de la cloche (3).
